# EUROPÄISCHE PATENTSCHRIFT

(11) **EP 3 023 622 B1**
(45) Veröffentlichungstag und Bekanntmachung des Hinweises auf die Patenterteilung: **02.10.2019**
(21) Anmeldenummer: 15003045.0
(22) Anmeldetag: 24.10.2015
(51) Int. Cl.: F02G 5/04, F01P 7/16, F01P 3/18, F01P 7/04, F02B 29/04, F02B 37/00

(54) **KÜHLSYSTEM FÜR EIN FAHRZEUG, INSBESONDERE FÜR EIN NUTZFAHRZEUG**
COOLING SYSTEM FOR A VEHICLE, IN PARTICULAR A COMMERCIAL VEHICLE
SYSTÈME DE REFROIDISSEMENT POUR UN VÉHICULE, NOTAMMENT POUR UN VÉHICULE UTILITAIRE

(30) Priorität: 20.11.2014 DE 102014017244
(43) Veröffentlichungstag der Anmeldung: 25.05.2016
(73) Patentinhaber: MAN Truck & Bus SE, 80995 München (DE)
(72) Erfinder: Schydlo, Alexander, 81243 München (DE); Robausch, Stefan, 4400 St. Ulrich bei Steyr (AT)
(74) Vertreter: Liebl, Thomas

(56) Entgegenhaltungen:
- EP-A2- 2 196 661
- WO-A1-2011/149409
- WO-A1-2012/115572
- US-A1- 2013 140 017
- US-A1- 2014 124 170

## Beschreibung

Die Erfindung betrifft ein Kühlsystem für ein Fahrzeug, insbesondere für ein Nutzfahrzeug, nach dem Oberbegriff des Patentanspruches 1, ein Verfahren zum Betreiben eines Kühlsystems für ein Fahrzeug, insbesondere für ein Nutzfahrzeug, nach dem Oberbegriff des Patentanspruches 15, ein Fahrzeug, insbesondere ein Nutzfahrzeug, nach Patentanspruch 16 mit dem Kühlsystem sowie ein Fahrzeug, insbesondere ein Nutzfahrzeug, nach Patentanspruch 17 mit dem Kühlsystem zur Durchführung des Verfahrens.

Es ist bei Fahrzeugen, insbesondere bei Nutzfahrzeugen bekannt, eine Energierückgewinnungs-Einrichtung (ER-Einrichtung) vorzusehen, mittels der aus einer Abwärme einer Brennkraftmaschine des Fahrzeugs nutzbare Energie rückgewonnen bzw. erzeugt werden kann. Bei dieser nutzbaren Energie kann es sich beispielsweise um mechanische, hydraulische oder aber auch elektrische Energie handeln. Die ER-Einrichtungen sind dabei häufig derart ausgebildet, dass die nutzbare Energie mittels eines thermodynamischen Kreisprozesses rückgewonnen bzw. erzeugt wird. Die ER-Einrichtungen umfassen daher üblicherweise wenigstens einen wärmezuführenden Wärmeübertrager (Wärmesenke), mittels dem Abwärme bzw. ein Abwärmestrom der Brennkraftmaschine in den thermodynamischen Kreisprozess eingetragen wird, und wenigstens einen wärmeabführenden Wärmeübertrager (Wärmequelle), mittels dem Wärme bzw. ein Wärmestrom aus dem thermodynamischen Kreisprozess ausgetragen wird.

Um einen möglichst hohen Wirkungsgrad der ER-Einrichtung zu erreichen, ist es weiter bekannt, den wärmeabführenden Wärmeübertrager der ER-Einrichtung mittels eines Niedrigtemperatur-Kühlmittelkreislaufs (NT-Kühlmittelkreislauf) des Fahrzeugs zu kühlen. Der NT-Kühlmittelkreislauf weist zumindest im Schnitt eine niedrigere Minimaltemperatur auf als ein Hochtemperatur-Kühlmittelkreislauf (HT-Kühlmittelkreislauf) zur Kühlung einer Brennkraftmaschine des Fahrzeugs und ist üblicherweise vollständig getrennt bzw. separiert von dem HT-Kühlmittelkreislauf ausgebildet. Mittels des NT-Kühlmittelkreislaufs wird dabei häufig nicht nur der wärmeabführende Wärmeübertrager der ER-Einrichtung, sondern auch wenigstens eine weitere zu kühlende Komponente des Fahrzeugs, beispielsweise indirekte Ladeluftkühler, eine Klimaanlage oder elektrische Bauteile des Fahrzeugs, gekühlt.

Aus der WO 2012/115572 A1 geht beispielsweise ein Fahrzeug mit einem System zur Umwandlung von thermischer Energie in mechanische Energie hervor, bei dem in einer bevorzugten Ausführung ein Hochtemperatur-Kühlmittelkreislauf zur Kühlung einer Brennkraftmaschine des Fahrzeugs und ein von dem Hochtemperatur-Kühlmittelkreislauf getrennter bzw. separierter zusätzlicher Niedrigtemperatur-Kühlkreislauf zur Kühlung eines wärmeabführenden Wärmeübertragers einer Energierückgewinnungs-Einrichtung vorgesehen sind. Mittels der Energierückgewinnungs-Einrichtung kann dabei aus einer Abwärme der Brennkraftmaschine nutzbare mechanische Energie rückgewonnen bzw. erzeugt werden. Mittels des Niedrigtemperatur-Kühlmittelkreislaufs werden hier zudem auch ein Ölkühler, eine Klimaanlage und elektrische Bauteile des Fahrzeugs gekühlt.

Die Kühlung des wenigstens eines wärmeabführenden Wärmeübertragers mittels des NT-Kühlmittelkreislaufs hat jedoch den Nachteil, dass der Niedrigtemperatur-Kühlmittelkreislauf häufig stark belastet wird. Dies führt regelmäßig dazu, dass die mittels des Niedrigtemperatur-Kühlmittelkreislaufs zu kühlenden Komponenten nicht ausreichend bzw. nicht wie gewünscht gekühlt werden, was sich beispielsweise negativ auf den Kraftstoffverbrauch des Fahrzeugs auswirken kann.

Die weitere Druckschrift WO 2011/149409 A1 betrifft ein Kühlsystem für ein Fahrzeug, bei dem in einem konkreten Ausführungsbeispiel des Kühlsystems ein Hochtemperatur-Kühlmittelkreislauf, ein Mitteltemperatur-Kühlmittelkreislauf und ein Niedrigtemperatur-Kühlmittelkreislauf vorgesehen sind, die strömungstechnisch miteinander verbunden und somit nicht voneinander getrennt sind. Mittels des Hochtemperatur-Kühlmittelkreislaufs wird hier beispielsweise eine Brennkraftmaschine des Fahrzeugs gekühlt. Mittels des Mitteltemperatur-Kühlmittelkreislaufs wird ein wärmeabführender Wärmeübertrager einer Energierückgewinnungs-Einrichtung des Fahrzeugs gekühlt. Mittels des Niedrigtemperatur-Kühlmittelkreislaufs werden hier beispielsweise ein Ladeluftkühler und ein AGR-Kühler des Fahrzeugs gekühlt. Die Energierückgewinnungs-Einrichtung arbeitet weist hier mehrere wärmezuführende Wärmeübertrager und einen wärmeabführenden Wärmeübertrager auf.

Aufgabe der Erfindung ist es, ein Kühlsystem für ein Fahrzeug, insbesondere für ein Nutzfahrzeug, und ein Verfahren zum Betreiben eines Kühlsystems für ein Fahrzeug, insbesondere für ein Nutzfahrzeug, bereitzustellen, mittels denen die Kühlung der mittels des Kühlsystems zu kühlenden Komponenten auf einfache und effektive Weise verbessert wird.

Diese Aufgabe wird durch die Merkmale des unabhängigen Vorrichtungsanspruchs 1 und des unabhängigen Verfahrensanspruchs 15 gelöst. Bevorzugte Weiterbildungen sind in den Unteransprüchen offenbart.

Erfindungsgemäß wird eine Kühlsystem für ein Fahrzeug, insbesondere für ein Nutzfahrzeug, mit den Merkmalen des Anspruchs 1 vorgeschlagen.

Auf diese Weise wird die Kühlung der mittels des Kühlsystems zu kühlenden Komponenten verbessert, da der wärmeabführende Wärmeübertrager nun nicht mehr nur mittels des NT-Kühlmittelkreislaufs, sondern nun auch mittels des HT-Kühlmittelkreislaufs gekühlt werden kann. Dadurch kann zum einen, abhängig von der Betriebssituation der Brennkraftmaschine des Fahrzeugs, ein größerer Wärmestrom mittels des wärmeabführenden Wärmeübertragers von der ER-Einrichtung abgeführt und der Wirkungsgrad der ER-Einrichtung erhöht werden. Zudem wird der NT-Kühlmittelkreislauf regelmäßig nicht mehr so stark durch den wärmeabführenden Wärmeübertrager der ER-Einrichtung belastet, so dass die mittels des NT-Kühlmittelkreislaufs zu kühlenden Komponenten des Fahrzeugs besser gekühlt werden können. Dies wirkt sich, insbesondere wenn ein Ladeluftkühler des Fahrzeugs mittels des NT-Kühlmittelkreislaufs gekühlt wird, positiv auf den Kraftstoffverbrauch und die Fahrfähigkeit des Fahrzeugs aus. Des Weiteren wird durch den erfindungsgemäßen wärmeabführenden Wärmeübertrager der ER-Einrichtung die Kühlung der mittels des Kühlsystems zu kühlenden Komponenten auch auf besonders einfache und effektive Weise verbessert, da nun auch die regelmäßig noch vorhandenen Kühlreserven des HT-Kühlmittelkreislaufs genutzt werden können.

An dieser Stelle sei ausdrücklich erwähnt, dass der HT-Kühlmittelkreislauf nicht nur allein zur Kühlung der Brennkraftmaschine des Fahrzeugs verwendet werden kann. Ebenso könnten zusätzlich zur Brennkraftmaschine auch andere zu kühlende Komponenten des Fahrzeugs, beispielsweise ein AGR-Kühler einer Abgasrückführung des Fahrzeugs, mittels des HT-Kühlmittelkreislaufs gekühlt werden.

Die wenigstens eine weitere, mittels des NT-Kühlmittelkreislauf zu kühlende Komponente kann beispielhaft ein Ladeluftkühler, ein Motorölkühler, eine Klimaanlage ein AGR-Kühler einer Abgasrückführung und/oder ein zu kühlendes elektrisches Bauteil des Fahrzeugs sein.

Des Weiteren sind die Begrifflichkeiten HT-Kühlkreislauf und NT-Kühlkreislauf hier derart auszulegen, dass die Minimaltemperatur des NT-Kühlkreislaufs vorwiegend bzw. im Durchschnitt niedriger ist als die Minimaltemperatur des HT-Kühlkreislaufs. Die Minimaltemperatur des NT-Kühlkreislaufs kann daher für kurze Zeitintervalle auch gleich oder höher sein als die Minimaltemperatur des HT-Kühlkreislaufs.

Erfindungsgemäß ist der wärmeabführende Wärmeübertrager derart ausgebildet, dass dieser zur Wärmeübertragung sowohl von dem HT-Kühlmittel des HT-Kühlmittelkreislaufs als auch von dem NT-Kühlmittel des NT-Kühlmittelkreislaufs durchströmt werden kann. Es ist dann weiter erfindungsgemäß eine Regel- und/oder Steuereinrichtung vorgesehen, mittels der der HT-Kühlmittelstrom und/oder der NT-Kühlmittelstrom durch den wärmeabführenden Wärmeübertrager in Abhängigkeit von wenigstens einem Fahrzeugparameter geregelt und/oder gesteuert werden kann. Mittels einer derartigen Regel- und/oder Steuereinrichtung kann der HT-Kühlmittelstrom und/oder der NT-Kühlmittelstrom durch den wärmeabführenden Wärmeübertrager wie gewünscht bzw. je nach Bedarf eingestellt und somit die Kühlung der mittels des HT-Kühlmittelkreislaufs und des NT-Kühlmittelkreislaufs zu kühlenden Komponenten auf einfache und effektive Weise optimiert werden.

Weiter bevorzugt ist der wenigstens eine Fahrzeugparameter eine aktuelle Betriebssituation der Brennkraftmaschine. Die aktuelle Betriebssituation der Brennkraftmaschine kann dabei beispielsweise durch die aktuelle Last der Brennkraftmaschine gekennzeichnet sein. Alternativ und/oder zusätzlich kann der wenigstens eine Fahrzeugparameter auch wenigstens eine an einem definierten Bereich des HT-Kühlmittelkreislaufs gemessene Temperatur des HT-Kühlmittels und/oder wenigstens eine an einem definierten Bereich des NT-Kühlmittelkreislaufs gemessene Temperatur des HT-Kühlmittels sein. Die gemessenen Temperaturen können dabei beispielsweise die maximale Temperatur des HT-Kühlmittels in dem HT-Kühlmittelkreislauf und die maximale Temperatur des NT-Kühlmittels in dem NT-Kühlmittelkreislauf sein. Weiter alternativ und/oder zusätzlich kann der wenigstens eine Fahrzeugparameter auch, sofern ein Ladeluftkühler vorgesehen ist, die Ladelufttemperatur und/oder der mittels des wärmeabführenden Wärmeübertragers abgeführte Wärmestrom sein. Derartige Fahrzeugparameter sind besonders relevant für die Optimierung der Kühlung mittels des HT-Kühlmittelkreislaufs und des NT-Kühlmittelkreislaufs.

In einer konkreten Ausführung kann eine HT-Bypasseinrichtung vorgesehen sein, mittels der der HT-Kühlmittelstrom zumindest teilweise an dem wärmeabführenden Wärmeübertrager vorbeigeleitet werden kann. Die Regel- und/oder Steuereinrichtung weist dann eine Ventileinrichtung auf, mittels der der HT-Kühlmittelstrom durch die HT-Bypasseinrichtung und durch den wärmeabführenden Wärmeübertrager, insbesondere stufenlos, eingestellt und/oder verstellt werden kann. Auf diese Weise kann der HT-Kühlmittelstrom durch den wärmeabführenden Wärmeübertrager einfach und zuverlässig mittels der Regel- und/oder Steuereinrichtung geregelt und/oder gesteuert werden.

Ebenso kann auch eine NT-Bypasseinrichtung vorgesehen sein, mittels der der NT-Kühlmittelstrom zumindest teilweise an dem wärmeabführenden Wärmeübertrager vorbeigeleitet werden kann. Die Regel- und/oder Steuereinrichtung weist dann eine Ventileinrichtung auf, mittels der der NT-Kühlmittelstrom durch die NT-Bypasseinrichtung und durch den wärmeabführenden Wärmeübertrager, insbesondere stufenlos, eingestellt und/oder verstellt werden kann.

In einer bevorzugten Ausführung weist der wärmeabführende Wärmeübertrager einen ersten Strömungskanal auf, der von dem HT-Kühlmittel des HT-Kühlmittelkreislaufs durchströmt werden kann. Der wärmeabführende Wärmeübertrager weist dann zudem einen zweiten Strömungskanal auf, der von dem NT-Kühlmittel des NT-Kühlmittelkreislaufs durchströmt werden kann. Weiter weist der wärmeabführende Wärmeübertrager auch einen dritten Strömungskanal auf, der von einem zu kühlenden ER-Fluid, insbesondere Wasser und/oder Wasserdampf, der ER-Einrichtung durchströmt werden kann. Mittels derartiger Strömungskanäle erfolgt die Wärmeübertragung mittels des wärmeabführenden Wärmeübertragers der ER-Einrichtung zuverlässig und effektiv. Bevorzugt sind die Strömungskanäle im Wesentlichen parallel zueinander verlaufend ausgebildet, um eine definierte Wärmeübertragung mittels des wärmeabführenden Wärmeübertragers auf einfache Weise gezielt einstellen zu können. Weiter bevorzugt sind die Strömungskanäle zumindest bereichsweise geradlinig verlaufend ausgebildet, um die Strömungskanäle besonders einfach auszubilden.

Sofern die Strömungskanäle im Wesentlichen parallel zueinander verlaufend ausgebildet sind, ist der wärmeabführende Wärmeübertrager vorzugsweise derart strömungstechnisch mit dem HT-Kühlmittelkreislauf, dem NT-Kühlmittelkreislauf und der ER-Einrichtung verbunden, dass der erste Strömungskanal in einer ersten Strömungsrichtung von dem HT-Kühlmittel durchströmt werden kann, dass der zweite Strömungskanal ebenfalls in der ersten Strömungsrichtung von dem NT-Kühlmittel durchströmt werden kann, und dass der dritte Strömungskanal in einer der ersten Strömungsrichtung entgegengesetzten, zweiten Strömungsrichtung von dem ER-Fluid durchströmt werden kann. Dadurch wird die Wärmeübertragung des wärmeabführenden Wärmeübertragers der ER-Einrichtung auf einfache und effektive Weise verbessert.

Weiter bevorzugt ist, sofern die Strömungskanäle im Wesentlichen parallel zueinander verlaufend ausgebildet sind, der von dem ER-Fluid durchströmte dritte Strömungskanal in einem definierten Nahbereich im Bereich des ersten und zweiten Strömungskanal verlaufend angeordnet, um die Wärmeübertragung mittels des wärmeabführenden Wärmeübertragers der ER-Einrichtung weiter zu verbessern. Bevorzugt ist zudem, sofern die Strömungskanäle im Wesentlichen parallel zueinander verlaufend ausgebildet sind, der von dem ER-Fluid durchströmte dritte Strömungskanal zwischen dem ersten und zweiten Strömungskanal verlaufend angeordnet, um die Abführung der Wärme von der ER-Einrichtung sowohl in den HT-Kühlkreislauf als auch in den NT-Kühlkreislauf besonders effektiv zu gestalten.

In einer konkreten Ausgestaltung kann die ER-Einrichtung derart ausgebildet sein, dass die Energie mittels eines thermodynamischen Prozesses, bevorzugt mittels eines geschlossenen thermodynamischen Kreisprozesses, rückgewonnen und/oder erzeugt werden kann, wobei mittels des wärmezuführenden Wärmeübertragers Wärme in den thermodynamischen Prozess eingetragen werden kann, und wobei mittels des wärmeabführenden Wärmeübertragers Wärme aus dem thermodynamischen Prozess ausgetragen werden kann. Mittels des thermodynamischen Prozesses kann die Energie auf besonders einfache Weise aus der Abwärme der Brennkraftmaschine rückgewonnen bzw. erzeugt werden. Der geschlossene thermodynamische Kreisprozess kann dabei beispielsweise ein Clausius-Rankine-Kreisprozess, ein Joule-Brayton-Kreisprozess, ein realer Ericsson-Kreisprozess oder ein Stirling-Kreisprozess sein.

In einer bevorzugten Ausführung ist der wenigstens eine wärmezuführende Wärmeübertrager der ER-Einrichtung einem Abgasstrang des Fahrzeugs derart zugeordnet, dass die in dem Abgas der Brennkraftmaschine gespeicherte Wärme der ER-Einrichtung zugeführt werden kann. Über die in dem Abgas der Brennkraftmaschine gespeicherte Wärme kann die Abwärme der Brennkraftmaschine auf besonders einfach genutzt werden. Alternativ und/oder zusätzlich kann der wenigstens eine wärmezuführende Wärmeübertrager dem HT-Kühlmittelkreislauf und/oder dem NT-Kühlmittelkreislauf derart zugeordnet sein, dass die in dem HT-Kühlmittel gespeicherte Wärme und/oder die in dem NT-Kühlmittel gespeicherte der ER-Einrichtung zugeführt werden kann. Auch über das HT-Kühlmittel und das NT-Kühlmittel kann die Wärme der mittels des HT-Kühlmittelkreislaufs und des NT-Kühlmittelkreislaufs zu kühlenden Komponenten auf einfache Weise der ER-Einrichtung zugeführt werden. Dadurch kann zudem auch die Kühlung des HT-Kühlmittelkreislaufs und des NT-Kühlmittelkreislaufs deutlich verbessert werden.

Vorzugsweise weist der Abgasstrang des Fahrzeugs eine Abgasrückführungs-Einrichtung auf, mittels der zumindest ein Teil des Abgases der Brennkraftmaschine wieder der Brennkraftmaschine zugeführt werden kann, wobei das Abgas der Brennkraftmaschine an einem Verzweigungsbereich des Abgasstrangs der Abgasrückführungs-Einrichtung zugeführt werden kann. Bevorzugt ist dabei vorgesehen, dass der wenigstens eine wärmezuführende Wärmeübertrager der Abgasrückführungs-Einrichtung und/oder einer, in Abgas-Strömungsrichtung gesehen, stromab des Verzweigungsbereichs angeordneten Abgasausleitungs-Einrichtung des Abgasstrangs zur Aussetzung des Abgases in die Fahrzeugumgebung zugeordnet ist. Durch die Zuordnung des wärmezuführenden Wärmeübertragers zur Abgasrückführungs-Einrichtung wird die Kühlung des in der Abgasrückführungs-Einrichtung strömenden Abgases deutlich verbessert. Mittels des der Abgasausleitungs-Einrichtung zugeordneten wärmezuführenden Wärmeübertragers kann der ER-Einrichtung ein besonders hoher Wärmestrom zugeführt werden.

Weiter bevorzugt ist der wenigstens eine wärmezuführende Wärmeübertrager, in Abgas-Strömungsrichtung gesehen, stromauf einer Turbine wenigstens eines Abgasturboladers des Fahrzeugs dem Abgasstrang zugeordnet, um einen funktionsoptimierten Aufbau sicherzustellen. Vorzugsweise ist der wenigstens eine der Abgasrückführungs-Einrichtung zugeordnete Wärmeübertrager zudem derart ausgebildet, dass mittels diesem die in dem Abgas gespeicherte Wärme sowohl der ER-Einrichtung als auch dem HT-Kühlmittelkreislauf und/oder dem NT-Kühlmittelkreislauf zugeführt werden kann. Auf diese Weise wird die Kühlung des in der Abgasrückführungs-Einrichtung einströmenden Abgases weiter verbessert.

In einer weiteren Ausgestaltung kann dem HT-Kühlmittelkreislauf eine, insbesondere unabhängig von einer Drehzahl der Brennkraftmaschine betreibbare, HT-Fördereinrichtung, insbesondere eine Pumpe, aufweisen, mittels der das HT-Kühlmittel durch den HT-Kühlmittelkreislauf gefördert werden kann. Um die HT-Fördereinrichtung unabhängig von der Drehzahl der Brennkraftmaschine betreiben zu können, kann die HT-Fördereinrichtung beispielsweise elektrisch antreibbar oder unter Zwischenschaltung einer Viskokupplung mechanisch mittels der Brennkraftmaschine angetrieben werden. Vorzugsweise weist der HT-Kühlmittelkreislauf zudem eine HT-Kühleinrichtung, insbesondere einen Kühler, auf, mittels der der HT-Kühlmittelkreislauf gekühlt werden kann. Eine derartige HT-Kühleinrichtung ermöglicht eine zuverlässige und effektive Kühlung des HT-Kühlmittelkreislaufs.

Ebenso kann auch der NT-Kühlmittelkreislauf eine, insbesondere unabhängig von einer Drehzahl der Brennkraftmaschine betreibbare, NT-Fördereinrichtung, insbesondere eine Pumpe, aufweisen, mittels der das NT-Kühlmittel durch den NT-Kühlmittelkreislauf gefördert werden kann. Zudem kann auch der NT-Kühlmittelkreislauf eine NT-Kühlmitteleinrichtung, insbesondere einen Kühler, aufweisen, mittels der der NT-Kühlmittelkreislauf gekühlt werden kann.

Vorzugsweise ist eine Regel- und/oder Steuereinrichtung vorgesehen, mittels der die ER-Einrichtung aktiviert und deaktiviert werden kann, um die ER-Einrichtung nur bei Bedarf verwenden zu können. Weiter bevorzugt ist der wärmeabführende Wärmeübertrager derart ausgebildet, dass mittels diesem, insbesondere bei deaktivierter ER-Einrichtung, Wärme von dem HT-Kühlmittelkreislauf in den NT-Kühlmittelkreislauf und/oder umgekehrt übertragen werden kann, um den HT-Kühlmittelkreislauf und den NT-Kühlmittelkreislauf noch effektiver nutzen zu können.

Zur Lösung der bereits genannten Aufgabe wird ferner ein Verfahren zum Betreiben eines Kühlsystems für ein Fahrzeug, insbesondere für ein Nutzfahrzeug, beansprucht, mit den Merkmalen des Anspruchs 15.

Die sich aus der erfindungsgemäßen Verfahrensführung ergebenden Vorteile sind identisch mit den bereits gewürdigten Vorteilen des erfindungsgemäßen Kühlsystems, so dass diese an dieser Stelle nicht wiederholt werden.

Des Weiteren wird auch ein Fahrzeug, insbesondere ein Nutzfahrzeug, mit dem erfindungsgemäßen Kühlsystem und/oder zur Durchführung des erfindungsgemäßen Verfahrens beansprucht. Die sich hierraus ergebenden Vorteile sind ebenfalls identisch mit den bereits gewürdigten Vorteilen des erfindungsgemäßen Kühlsystems und des erfindungsgemäßen Verfahrens, so dass auch diese hier nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Darstellung von vorne einen Lastkraftwagen mit dem erfindungsgemäßen Kühlsystem;
- Fig. 2: in einer schematischen Darstellung den Aufbau des Kühlsystems; und
- Fig. 3: in einer schematischen Darstellung einen wärmeabführenden Wärmeübertrager des Kühlsystems.

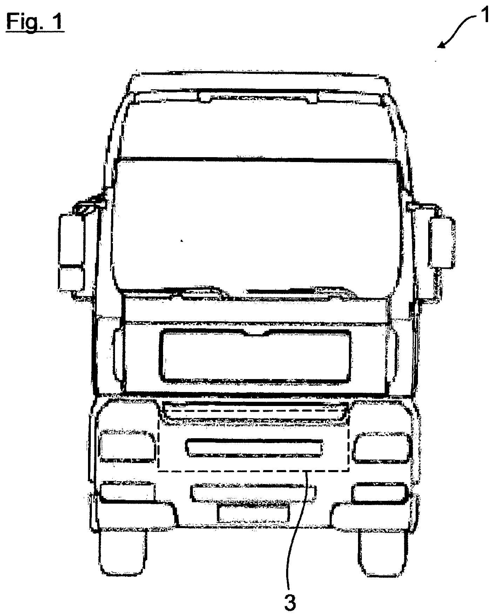

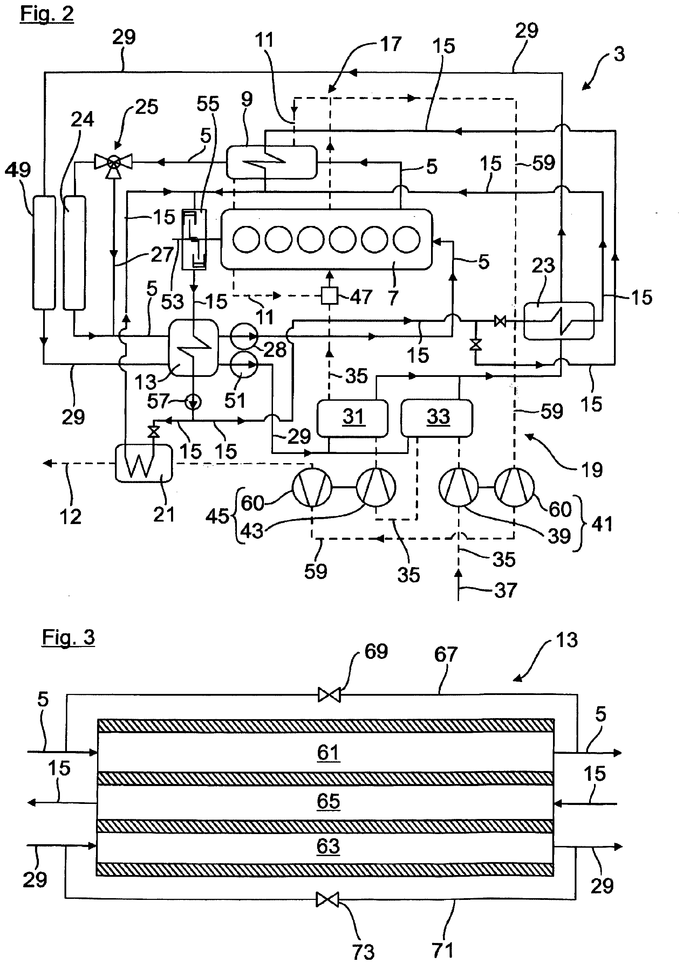

In Fig. 1 ist ein hier beispielhaft als Lastkraftwagen 1 ausgebildetes Fahrzeug von vorne gezeigt. Der Lastkraftwagen 1 weist ein in Fig. 1 mit gestrichelten Linien angedeutetes Kühlsystem 3 auf. Der Aufbau des Kühlsystems 3 ist schematisch in Fig. 2 gezeigt.

Gemäß Fig. 2 weist das Kühlsystem 3 einen Hochtemperatur-Kühlmittelkreislauf (HT-Kühlmittelkreislauf) 5 auf, mittels dem eine Brennkraftmaschine 7 des Lastkraftwagens 1 flüssigkeitsgekühlt wird. Zudem werden mittels des HT-Kühlmittelkreislaufs 5 hier auch ein AGR-Kühler 9 zur Kühlung eines in einer Abgasrückführungs-Einrichtung 11 des Lastkraftwagens 1 strömenden Abgases 12 der Brennkraftmaschine und ein wärmeabführender Wärmeübertrager 13 einer Energie-Rückgewinnungseinrichtung (ER-Einrichtung) 15 des Lastkraftwagens 1 gekühlt. Mittels der Abgasrückführungs-Einrichtung 11 kann ein Teil eines Abgases 12 der Brennkraftmaschine 7 wieder der Brennkraftmaschine 7 zugeführt werden. Das Abgas der Brennkraftmaschine 7 wird dabei an einem Verzweigungsbereich 17 eines Abgasstrangs 19 des Lastkraftwagens 1 der Abgasrückführungs-Einrichtung 11 zugeführt. Mittels der ER-Einrichtung 15 kann aus einer Abwärme des Lastkraftwagens 1 nutzbare Energie, beispielsweise mechanische oder elektrische Energie oder Druckluft, rückgewonnen bzw. erzeugt werden. Die nutzbare Energie wird hier beispielshaft mittels des Clausius-Rankine-Kreisprozesses rückgewonnen bzw. erzeugt, wobei mittels des AGR-Kühlers 9 und wärmezuführenden Wärmeübertragern 21, 23 Wärme bzw. ein Wärmestrom in den Clausius-Rankine-Kreisprozess eingetragen wird, und wobei mittels des wärmeabführenden Wärmeübertragers 13 Wärme bzw. ein Wärmestrom aus dem Clausius-Rankine-Kreisprozess ausgetragen wird. Die genaue Funktionsweise der ER-Einrichtung 15 wird später noch detaillierter erläutert.

Wie in Fig. 2 weiter gezeigt ist, ist der AGR-Kühler 9, in HT-Kühlmittel-Strömungsrichtung gesehen, stromab der Brennkraftmaschine 7 in dem HT-Kühlmittelkreislauf 5 angeordnet. Stromab des AGR-Kühlers 9 ist weiter ein Kühler 24 zur Kühlung des HT-Kühlmittels in dem HT-Kühlmittelkreislauf 5 angeordnet. Zwischen dem AGR-Kühler 9 und dem Kühler 24 ist hier beispielhaft ein als Thermostat ausgebildetes Mehrwege-Ventil 25 angeordnet. Sofern die Temperatur des HT-Kühlmittels dabei einen definierten Wert übersteigt, wird mittels des Mehrwege-Ventils 25 der HT-Kühlmittelstrom von dem AGR-Kühler 9 zu dem Kühler 24 freigegeben und der HT-Kühlmittelstrom über eine Bypasseinrichtung 27, mittels der der HT-Kühlmittelstrom an dem Kühler 24 vorbeigeleitet werden kann, gesperrt. Sofern die Temperatur des HT-Kühlmittels geringer ist als der definierte Wert wird der HT-Kühlmittelstrom durch den Kühler 24 gesperrt und der HT-Kühlmittelstrom durch die Bypasseinrichtung 27 freigegeben. In HT-Kühlmittel-Strömungsrichtung gesehen, stromab des Kühlers 24 und der Bypasseinrichtung 27 ist weiter der wärmeabführende Wärmeübertrager 13 der ER-Einrichtung 15 in dem HT-Kühlmittelkreislauf 5 angeordnet. Stromab des wärmeabführenden Wärmeübertragers 13 ist zudem eine, vorzugsweise unabhängig von einer Drehzahl der Brennkraftmaschine 7 betreibbare, Pumpe 28 in dem HT-Kühlmittelkreislauf 5 angeordnet, mittels der das HT-Kühlmittel durch den HT-Kühlmittelkreislauf 5 gefördert wird.

Des Weiteren weist das Kühlsystem 3 auch einen von dem HT-Kühlmittelkreislauf 5 getrennten bzw. separierten, eine niedrigere Temperatur als der HT-Kühlmittelkreislauf 5 aufweisenden Niedrigtemperatur-Kühlmittelkreislauf (NT-Kühlmittelkreislauf) 29 auf. Mittels des NT-Kühlmittelkreislaufs 29 werden hier beispielhaft Ladeluftkühler 31, 33 und der wärmeabführende Wärmeübertrager 13 der ER-Einrichtung 15 gekühlt. Die Ladeluftkühler 31, 33 sind einem in Fig. 2 mit gestrichelten Linien angedeuteten Ansaugtrakt 35 des Lastkraftwagens 1 zugeordnet, mittels dem der Brennkraftmaschine 7 des Lastkraftwagens 1 Verbrennungsluft 37 zugeführt wird. Der Ladeluftkühler 33 ist dabei, in Verbrennungsluft-Strömungsrichtung gesehen, stromab eines Verdichters 39 eines ersten Abgasturboladers 41 und stromauf eines Verdichters 43 eines zweiten Abgasturboladers des Lastkraftwagens 1 in dem Ansaugtrakt 35 angeordnet. Der Ladeluftkühler 31 ist, in Verbrennungsluft-Strömungsrichtung gesehen, stromab des Verdichters 43 des zweiten Abgasturboladers 45 und stromauf einer Mischkammer 47 in dem Ansaugtrakt 35 angeordnet. In die Mischkammer 47 mündet die Abgasrückführungs-Einrichtung 11 des Lastkraftwagens 1, so dass das rückgeführte Abgas 12 und die der Brennkraftmaschine 7 zugeführte Verbrennungsluft 37 in der Mischkammer 47 miteinander vermischt und ausgehend von der Mischkammer 47 der Brennkraftmaschine 7 zugeführt werden können. Des Weiteren sind die Ladeluftkühler 31, 33 hier, in NT-Kühlmittel-Strömungsrichtung gesehen, stromab des wärmeabführenden Wärmeübertragers 13 der ER-Einrichtung 15 in dem NT-Kühlmittelkreislauf 29 angeordnet. Die Ladeluftkühler 31, 33 sind hier zudem derart in dem NT-Kühlmittelkreislauf 29 angeordnet, dass sie parallel von dem NT-Kühlmittel des NT-Kühlmittelkreislaufs 29 durchströmt werden.

Wie in Fig. 2 weiter gezeigt ist, ist, in NT-Kühlmittel-Strömungsrichtung gesehen, stromab der Ladeluftkühler 31, 33 der wärmezuführende Wärmeübertrager 23 der ER-Einrichtung 15 in dem NT-Kühlmittelkreislauf 29 angeordnet. Mittels des wärmezuführenden Wärmeübertragers 23 wird der NT-Kühlmittelkreislauf 29 gekühlt. Zudem ist, in NT-Kühlmittel-Strömungsrichtung gesehen, stromab des wärmezuführenden Wärmeübertragers 21 auch ein Kühler 49 in dem NT-Kühlmittelkreislauf 29 angeordnet, um den NT-Kühlmittelkreislauf 29 zu kühlen. Stromab des Kühlers 49 ist der wärmeabführende Wärmeübertrager 13 der ER-Einrichtung 15 dem NT-Kühlmittelkreislauf 29 zugeordnet. Zwischen dem wärmeabführenden Wärmeübertrager 13 und den Ladeluftkühlern 31, 33 ist weiter eine, vorzugsweise unabhängig von der Drehzahl der Brennkraftmaschine 7 betreibbare, Pumpe 51 in dem NT-Kühlmittelkreislauf 29 angeordnet, mittels der das NT-Kühlmittel durch den NT-Kühlmittelkreislauf 29 gefördert wird.

Wie bereits erwähnt, erfolgt die Rückgewinnung bzw. Erzeugung der nutzbaren Energie hier beispielhaft mittels des Clausius-Rankine-Kreisprozesses. Als Arbeitsmittel bzw. ER-Fluid kann dabei beispielsweise Wasser oder Ethanol verwendet werden. Zur Expansion des dampfförmigen Arbeitsmittels weist die ER-Einrichtung 15 hier beispielhaft einen mit einer Kurbelwelle 53 der Brennkraftmaschine 7 verbundenen Kolbenexpander 55 auf, der durch das vorbeiströmende dampfförmige Arbeitsmittel angetrieben wird. Der Kolbenexpander 55 ist dabei derart mit der Kurbelwelle 53 der Brennkraftmaschine 7 verbunden, dass das mittels des Kolbenexpanders 55 erzeugte Drehmoment auf die Kurbelwelle 53 der Brennkraftmaschine 7 übertragen wird. Alternativ zu dem Kolbenexpander 55 könnte hier beispielsweise auch eine herkömmliche Turbine verwendet werden. Ebenso könnte die Energie des Kolbenexpanders 55 beispielsweise nicht unmittelbar der Brennkraftmaschine 7 zugeführt werden, sondern zunächst als elektrische Energie in einer Batterie gespeichert werden.

Nach der Expansion erfolgt im Clausius-Rankine-Kreisprozesses die Kondensation des Arbeitsmittels. Zur Kondensation des dampfförmigen Arbeitsmittels weist die ER-Einrichtung 15 den wärmeabführenden Wärmeübertrager 13 auf, mittels dem das durch den wärmeabführenden Wärmeübertrager 13 strömende Arbeitsmittel gekühlt wird. Nach der Kondensation erfolgt die Druckerhöhung des Arbeitsmittels. Zur Druckerhöhung weist die ER-Einrichtung 15 eine Pumpe 57 auf, mittels der das kondensierte Arbeitsmittel zu den wärmezuführenden Wärmeübertragern 21, 23 und zu dem AGR-Kühler 9 gefördert wird. Mittels der wärmezuführenden Wärmeübertrager 21, 23 und dem AGR-Kühler 9 wird dem Clausius-Rankine-Kreisprozess Wärme zugefügt. Der wärmezuführende Wärmeübertrager 21 ist dabei einer, in Abgas-Strömungsrichtung gesehen, stromab des Verzweigungsbereichs 17 des Abgasstrangs 19 angeordneten Abgasausleitungs-Einrichtung 59 des Abgasstrangs 19 zur Ausleitung des Abgases 12 in die Fahrzeugumgebung zugeordnet. Mittels des wärmezuführende Wärmeübertragers 21 wird daher die in dem Abgas 12 der Brennkraftmaschine 7 gespeicherte Wärme der ER-Einrichtung 15 zugeführt. Der wärmezuführende Wärmeübertrager 21 ist hier beispielhaft stromab von Turbinen 60 der Abgasturbolader 41, 45 angeordnet. Der wärmezuführende Wärmeübertrager 23 ist, wie bereits erwähnt, dem NT-Kühlmittelkreislauf 29 zugeordnet, so dass mittels des wärmezuführende Wärmeübertragers 23 die in dem NT-Kühlmittel gespeicherte Wärme der ER-Einrichtung 15 zugeführt wird. Mittels des AGR-Kühlers 9 der Abgasrückführungs-Einrichtung 11 wird die in dem durch die Abgasrückführungs-Einrichtung 11 strömenden Abgas gespeicherte Wärme der ER-Einrichtung 15 zugeführt.

In Fig. 3 ist der Aufbau des wärmeabführenden Wärmeübertragers 13 beispielhaft gezeigt. Der wärmeabführende Wärmeübertrager 13 weist einen ersten Strömungskanal 61 auf, der von dem HT-Kühlmittel des HT-Kühlmittelkreislaufs 5 durchströmt werden kann. Zudem weist der wärmeabführende Wärmeübertrager 13 hier auch einen zweiten Strömungskanal 63 auf, der von dem NT-Kühlmittel des NT-Kühlmittelkreislaufs 29 durchströmt werden kann. Der wärmeabführende Wärmeübertrager 13 weist auch einen dritten Strömungskanal 65 auf, der von dem zu kühlenden Arbeitsmittel der ER-Einrichtung 15 durchströmt werden kann. Die Strömungskanäle 61, 63, 65 sind hier beispielhaft parallel zueinander verlaufend und geradlinig verlaufend ausgebildet. Zudem ist der wärmeabführende Wärmeübertrager 13 hier derart strömungstechnisch mit dem HT-Kühlmittelkreislauf 5, dem NT-Kühlmittelkreislauf 29 und der ER-Einrichtung 15 verbunden, dass der erste Strömungskanal 61 in einer ersten Strömungsrichtung von dem HT-Kühlmittel durchströmt wird, der zweite Strömungskanal ebenfalls in der ersten Strömungsrichtung von dem NT-Kühlmittel durchströmt wird und der dritte Strömungskanal 65 in einer ersten Strömungsrichtung entgegengesetzten zweiten Strömungsrichtung von dem Arbeitsmittel durchströmt wird. Der von dem Arbeitsmittel durchströmte dritte Strömungskanal 65 ist zudem in einem definierten Nahbereich im Bereich des ersten und zweiten Strömungskanals 61, 63 verlaufend und zwischen dem ersten und zweiten Strömungskanal 61, 63 verlaufend angeordnet.

Wie in Fig. 3 weiter gezeigt ist, ist dem wärmeabführenden Wärmeübertrager 13 hier beispielhaft eine HT-Bypasseinrichtung 67 zugeordnet, mittels der der HT-Kühlmittelstrom zumindest teilweise an dem wärmeabführenden Wärmeübertrager 13 vorbeigeleitet werden kann. Der HT-Bypasseinrichtung 67 ist hier zudem eine Ventileinrichtung, hier beispielhaft ein stufenlos verstellbares Durchgangsventil 69, zugeordnet, mittels der der HT-Kühlmittelstrom durch die HT-Bypasseinrichtung 67 und somit auch durch den wärmeabführenden Wärmeübertrager 13 eingestellt bzw. verstellt werden kann. Des Weiteren ist dem wärmeabführenden Wärmeübertrager 13 hier beispielhaft auch eine NT-Bypasseinrichtung 71 zugeordnet, mittels der der NT-Kühlmittelstrom zumindest teilweise an dem wärmeabführenden Wärmeübertrager 13 vorbeigeleitet werden kann. Der NT-Bypasseinrichtung 71 ist hier zudem eine Ventileinrichtung, hier beispielhaft ein stufenlos verstellbares Durchgangsventil 73, zugeordnet, mittels der der NT-Kühlmittelstrom durch die NT-Bypasseinrichtung 71 und somit auch durch den wärmeabführenden Wärmeübertrager 13 eingestellt bzw. verstellt werden kann.

Der erfindungsgemäße wärmeabführende Wärmeübertragers 13 erhöht die Flexibilität des Kühlsystems 3 deutlich, da dieser sowohl mittels des HT-Kühlmittelkreislaufs 5 als auch mittels des NT-Kühlmittelkreislaufs 29 gekühlt werden kann. Dadurch kann der Lastkraftwagen 1 besonders energieeffizient betrieben werden.

### Bezugszeichenliste

- 1: Lastkraftwagen
- 3: Kühlsystem
- 5: HT-Kühlmittelkreislauf
- 7: Brennkraftmaschine
- 9: AGR-Kühler
- 11: Abgasrückführungs-Einrichtung
- 12: Abgas
- 13: wärmeabführender Wärmeübertrager
- 15: ER-Einrichtung
- 17: Verzweigungsbereich
- 19: Abgasstrang
- 21: wärmezuführender Wärmeübertrager
- 23: wärmezuführender Wärmeübertrager
- 24: Kühler
- 25: Mehrwege-Ventil
- 27: Bypasseinrichtung
- 28: Pumpe
- 29: NT-Kühlmittelkreislauf
- 31: Ladeluftkühler
- 33: Ladeluftkühler
- 35: Ansaugtrakt
- 37: Verbrennungsluft
- 39: Verdichter
- 41: erster Abgasturbolader
- 43: Verdichter
- 45: zweiter Abgasturbolader
- 47: Mischkammer
- 49: Kühler
- 51: Pumpe
- 53: Kurbelwelle
- 55: Kolbenexpander
- 57: Pumpe
- 59: Abgasausleitungs-Einrichtung
- 60: Turbine
- 61: erster Strömungskanal
- 63: zweiter Strömungskanal
- 65: dritter Strömungskanal
- 67: Bypasseinrichtung
- 69: Durchgangsventil
- 71: Bypasseinrichtung
- 73: Durchgangsventil

## Patentansprüche

1. Kühlsystem für ein Fahrzeug, insbesondere für ein Nutzfahrzeug, mit einem Hochtemperatur-Kühlmittelkreislauf (HT-Kühlmittelkreislauf, 5) zur Flüssigkeitskühlung einer Brennkraftmaschine (7) des Fahrzeugs (1), und mit einem von dem HT-Kühlmittelkreislauf 5 getrennten, eine niedrigere Temperatur als der HT-Kühlmittelkreislauf 5 aufweisenden Niedrigtemperatur-Kühlmittelkreislauf (NT-Kühlmittelkreislauf, 29) zur Flüssigkeitskühlung wenigstens einer weiteren zu kühlenden Komponente (13, 31, 33) des Fahrzeugs (1), insbesondere wenigstens eines Ladeluftkühlers des Fahrzeugs, wobei eine Energierückgewinnungs-Einrichtung (ER-Einrichtung, 15) vorgesehen ist, mittels der aus einer Abwärme des Fahrzeugs (1), insbesondere einer Abwärme der Brennkraftmaschine (7) und/oder des NT-Kühlmittelkreislaufs (29), mechanische, hydraulische oder elektrische Energie rückgewinnbar und/oder erzeugbar ist, wobei die ER-Einrichtung (15) wenigstens einen wärmezuführenden Wärmeübertrager (9, 21, 23) aufweist, mittels dem die Abwärme des Fahrzeugs (1) der ER-Einrichtung (15) zuführbar ist, wobei die ER-Einrichtung (15) wenigstens einen wärmeabführenden Wärmeübertrager (13) aufweist, mittels dem Wärme von der ER-Einrichtung (15) abführbar ist, wobei der wärmeabführende Wärmeübertrager (13) derart ausgebildet und angeordnet ist, dass mittels diesem Wärme von der ER-Einrichtung (15) sowohl in den HT-Kühlmittelkreislauf (5) als auch in den NT-Kühlmittelkreislauf (29) abführbar ist, **dadurch gekennzeichnet, dass** der wärmeabführende Wärmeübertrager (13) derart ausgebildet ist, dass dieser zur Wärmeübertragung sowohl von dem HT-Kühlmittel des HT-Kühlmittelkreislaufs (5) als auch von dem NT-Kühlmittel des NT-Kühlmittelkreislaufs (29) durchströmbar ist, und dass eine Regel- und/oder Steuereinrichtung (69, 73) vorgesehen ist, mittels der der HT-Kühlmittelstrom und/oder der NT-Kühlmittelstrom durch den wärmeabführenden Wärmeübertrager (13) in Abhängigkeit von wenigstens einem Fahrzeugparameter regelbar und/oder steuerbar ist.

2. Kühlsystem nach Anspruch 1, **dadurch gekennzeichnet, dass** der wenigstens eine Fahrzeugparameter eine aktuelle Betriebssituation der Brennkraftmaschine (7) und/oder wenigstens eine an einem definierten Bereich des HT-Kühlmittelkreislaufs (5) gemessene Temperatur des HT-Kühlmittels und/oder wenigstens eine an einem definierten Bereich des NT-Kühlmittelkreislaufs (29) gemessene Temperatur des NT-Kühlmittels und/oder, sofern ein Ladeluftkühler (31, 33) vorgesehen ist, die Ladelufttemperatur und/oder der mittels des wärmeabführenden Wärmeübertragers (13) abgeführte Wärmestrom ist.

3. Kühlsystem nach Anspruch 1 oder 2, **dadurch gekennzeichnet, dass** eine HT-Bypasseinrichtung (67) vorgesehen ist, mittels der der HT-Kühlmittelstrom zumindest teilweise an dem wärmeabführenden Wärmeübertrager (13) vorbeileitbar ist, und dass die Regel- und/oder Steuereinrichtung (69, 73) eine Ventileinrichtung aufweist, mittels der der HT-Kühlmittelstrom durch die HT-Bypasseinrichtung (67) und durch den wärmeabführenden Wärmeübertrager (13), insbesondere stufenlos, einstellbar und/oder verstellbar ist.

4. Kühlsystem nach einem der vorhergehenden Ansprüche, **dadurch gekennzeichnet, dass** eine NT-Bypasseinrichtung (71) vorgesehen ist, mittels der der NT-Kühlmittelstrom zumindest teilweise an dem wärmeabführenden Wärmeübertrager (13) vorbeileitbar ist, und dass die Regel- und/oder Steuereinrichtung (69, 73) eine Ventileinrichtung aufweist, mittels der der NT-Kühlmittelstrom durch die NT-Bypasseinrichtung (71) und durch den wärmeabführenden Wärmeübertrager (13), insbesondere stufenlos, einstellbar und/oder verstellbar ist.

5. Kühlsystem nach einem der vorhergehenden Ansprüche, **dadurch gekennzeichnet, dass** der wärmeabführende Wärmeübertrager (13) einen ersten Strömungskanal (61) aufweist, der von dem HT-Kühlmittel des HT-Kühlmittelkreislaufs (5) durchströmbar ist, dass der wärmeabführende Wärmeübertrager (13) einen zweiten Strömungskanal (63) aufweist, der von dem NT-Kühlmittel des NT-Kühlmittelkreislaufs (29) durchströmbar ist, und dass der wärmeabführende Wärmeübertrager (13) einen dritten Strömungskanal (65) aufweist, der von einem zu kühlenden ER-Fluid, insbesondere Wasser und/oder Wasserdampf, der ER-Einrichtung (15) durchströmbar ist, wobei bevorzugt vorgesehen ist, dass die Strömungskanäle (61, 63, 65) im Wesentlichen parallel zueinander verlaufend und/oder zumindest bereichsweise geradlinig verlaufend ausgebildet sind.

6. Kühlsystem nach Anspruch 5, **dadurch gekennzeichnet, dass** die Strömungskanäle (61, 63, 65) im Wesentlichen parallel zueinander verlaufend ausgebildet sind, und dass der wärmeabführende Wärmeübertrager (13) derart strömungstechnisch mit dem HT-Kühlmittelkreislauf (5), dem NT-Kühlmittelkreislauf (29) und der ER-Einrichtung (15) verbunden ist, dass der erste Strömungskanal (61) in einer ersten Strömungsrichtung von dem HT-Kühlmittel durchströmbar ist, dass der zweite Strömungskanal (63) ebenfalls in der ersten Strömungsrichtung von dem NT-Kühlmittel durchströmbar ist, und dass der dritte Strömungskanal (65) in einer der ersten Strömungsrichtung entgegengesetzten zweiten Strömungsrichtung von dem ER-Fluid durchströmbar ist.

7. Kühlsystem nach Anspruch 5 oder 6, **dadurch gekennzeichnet, dass** die Strömungskanäle (61, 63, 65) im Wesentlichen parallel zueinander verlaufend ausgebildet sind, und dass der von dem ER-Fluid durchströmte dritte Strömungskanal (65) in einem definierten Nahbereich im Bereich des ersten und/oder zweiten Strömungskanals (61, 63) verlaufend und/oder zwischen dem ersten und zweiten Strömungskanal (61, 63) verlaufend angeordnet ist.

8. Kühlsystem nach einem der vorhergehenden Ansprüche, **dadurch gekennzeichnet, dass** die ER-Einrichtung (15) derart ausgebildet ist, dass die Energie mittels eines thermodynamischen Prozesses, bevorzugt mittels eines geschlossenen thermodynamischen Kreisprozesses rückgewinnbar und/oder erzeugbar ist, wobei mittels des wärmezuführenden Wärmeübertragers (9, 21, 23) Wärme in den thermodynamischen Prozess eintragbar ist, und wobei mittels des wärmeabführenden Wärmeübertragers (13) Wärme aus dem thermodynamischen Prozess austragbar ist.

9. Kühlsystem nach einem der vorhergehenden Ansprüche, **dadurch gekennzeichnet, dass** der wenigstens eine wärmezuführende Wärmeübertrager (9, 21, 23) einem Abgasstrang (19) des Fahrzeugs (1) derart zugeordnet ist, dass die in dem Abgas (12) der Brennkraftmaschine (7) gespeicherte Wärme der ER-Einrichtung (15) zuführbar ist, und/oder dass der wenigstens eine wärmezuführende Wärmeübertrager (9, 21, 23) dem HT-Kühlmittelkreislauf (5) und/oder dem NT-Kühlmittelkreislauf (29) derart zugeordnet ist, dass die in dem HT-Kühlmittel gespeicherte Wärme und/oder die in dem NT-Kühlmittel gespeicherte Wärme der ER-Einrichtung (15) zuführbar ist.

10. Kühlsystem nach Anspruch 9, **dadurch gekennzeichnet, dass** der Abgasstrang (19) des Fahrzeugs (1) eine Abgasrückführungs-Einrichtung (11) aufweist, mittels der zumindest ein Teil des Abgases (12) der Brennkraftmaschine (7) wieder der Brennkraftmaschine (7) zuführbar ist, wobei das Abgas (12) der Brennkraftmaschine an einem Verzweigungsbereich (17) des Abgasstrangs (19) der Abgasrückführungs-Einrichtung (11) zuführbar ist, wobei bevorzugt vorgesehen ist, dass der wenigstens eine wärmezuführende Wärmeübertrager (9, 21, 23) der Abgasrückführungs-Einrichtung (11) und/oder einer, in Abgas-Strömungsrichtung gesehen, stromab des Verzweigungsbereichs (17) angeordneten Abgasausleitungs-Einrichtung (59) des Abgasstrangs (19) zur Ausleitung des Abgases (12) in die Fahrzeugumgebung zugeordnet ist.

11. Kühlsystem nach Anspruch 9 oder 10, **dadurch gekennzeichnet, dass** der wenigstens eine wärmezuführende Wärmeübertrager (9, 21, 23), in Abgas-Strömungsrichtung gesehen, stromauf einer Turbine (60) wenigstens eines Abgasturboladers (41, 45) des Fahrzeugs (1) dem Abgasstrang (19) zugeordnet ist, und/oder dass der wenigstens eine der Abgasrückführungs-Einrichtung (11) zugeordnete Wärmeübertrager (9, 21, 23) derart ausgebildet ist, dass mittels diesem die in dem Abgas (12) gespeicherte Wärme sowohl der ER-Einrichtung (15) als auch dem HT-Kühlmittelkreislauf (5) und/oder dem NT-Kühlmittelkreislauf (29) zuführbar ist.

12. Kühlsystem nach einem der vorhergehenden Ansprüche, **dadurch gekennzeichnet, dass** der HT-Kühlmittelkreislauf (5) eine, insbesondere unabhängig von einer Drehzahl der Brennkraftmaschine (7) betreibbare, HT-Fördereinrichtung (28), insbesondere eine Pumpe, aufweist, mittels der das HT-Kühlmittel durch den HT-Kühlmittelkreislauf (5) förderbar ist, und/oder dass der HT-Kühlmittelkreislauf (5) eine HT-Kühleinrichtung (24), insbesondere einen Kühler, aufweist, mittels der der HT-Kühlmittelkreislauf (5) kühlbar ist.

13. Kühlsystem nach einem der vorhergehenden Ansprüche, **dadurch gekennzeichnet, dass** der NT-Kühlmittelkreislauf (29) eine, insbesondere unabhängig von einer Drehzahl der Brennkraftmaschine (7) betreibbare, NT-Fördereinrichtung (51), insbesondere eine Pumpe, aufweist, mittels der das NT-Kühlmittel durch den NT-Kühlmittelkreislauf (29) förderbar ist, und/oder dass der NT-Kühlmittelkreislauf (29) eine NT-Kühleinrichtung (49), insbesondere einen Kühler, aufweist, mittels der der NT-Kühlmittelkreislauf (29) kühlbar ist.

14. Kühlsystem nach einem der vorhergehenden Ansprüche, **dadurch gekennzeichnet, dass** eine Regel- und/oder Steuereinrichtung vorgesehen ist, mittels der die ER-Einrichtung (15) aktivierbar und deaktivierbar ist, und/oder dass der wärmeabführende Wärmeübertrager (13) derart ausgebildet ist, dass mittels diesem, insbesondere bei deaktivierter ER-Einrichtung (15), Wärme von dem HT-Kühlmittelkreislauf (5) in den NT-Kühlmittelkreislauf (29) und/oder umgekehrt übertragbar ist.

15. Verfahren zum Betreiben eines Kühlsystems für ein Fahrzeug, insbesondere für ein Nutzfahrzeug, mit einem Hochtemperatur-Kühlmittelkreislauf (HT-Kühlmittelkreislauf, 5) zur Flüssigkeitskühlung einer Brennkraftmaschine (7) des Fahrzeugs (1), und mit einem von dem HT-Kühlmittelkreislauf (5) getrennten, eine niedrigere Temperatur als der HT-Kühlmittelkreislauf (5) aufweisenden Niedrigtemperatur-Kühlmittelkreislauf (NT-Kühlmittelkreislauf, 29) zur Flüssigkeitskühlung wenigstens einer weiteren zu kühlenden Komponente (13, 31, 33) des Fahrzeugs (1), insbesondere wenigstens eines Ladeluftkühlers des Fahrzeugs, wobei eine Energierückgewinnungs-Einrichtung (ER-Einrichtung, 15) vorgesehen ist, mittels der aus einer Abwärme des Fahrzeugs (1), insbesondere einer Abwärme der Brennkraftmaschine (7) und/oder des NT-Kühlmittelkreislaufs (29), mechanische, hydraulische oder elektrische Energie rückgewonnen und/oder erzeugt wird, wobei die ER-Einrichtung (15) wenigstens einen wärmezuführenden Wärmeübertrager (9, 21, 23) aufweist, mittels dem die Abwärme des Fahrzeugs (1) der ER-Einrichtung (15) zugeführt wird, wobei die ER-Einrichtung (15) wenigstens einen wärmeabführenden Wärmeübertrager (13) aufweist, mittels dem Wärme von der ER-Einrichtung (15) abgeführt wird, wobei der wärmeabführende Wärmeübertrager (13) derart ausgebildet und angeordnet ist, dass mittels diesem zumindest zeitweise Wärme von der ER-Einrichtung (15) sowohl in den HT-Kühlmittelkreislauf (5) als auch in den NT-Kühlmittelkreislauf (29) abgeführt wird, **dadurch gekennzeichnet, dass** der wärmeabführende Wärmeübertrager (13) derart ausgebildet ist, dass dieser zur Wärmeübertragung sowohl von dem HT-Kühlmittel des HT-Kühlmittelkreislaufs (5) als auch von dem NT-Kühlmittel des NT-Kühlmittelkreislaufs (29) durchströmt wird, und dass eine Regel- und/oder Steuereinrichtung (69, 73) vorgesehen ist, mittels der der HT-Kühlmittelstrom und/oder der NT-Kühlmittelstrom durch den wärmeabführenden Wärmeübertrager (13) in Abhängigkeit von wenigstens einem Fahrzeugparameter geregelt und/oder gesteuert wird.

16. Fahrzeug, insbesondere Nutzfahrzeug, mit einem Kühlsystem nach einem der Ansprüche 1 bis 14.

17. Fahrzeug, insbesondere Nutzfahrzeug, mit einem Kühlsystem nach einem der Ansprüche 1 bis 14 zur Durchführung eines Verfahrens nach Anspruch 15.

## Claims

1. Cooling system for a vehicle, in particular for a utility vehicle, having a high-temperature coolant circuit (HT coolant circuit, 5) for the liquid cooling of an internal combustion engine (7) of the vehicle (1), and having a low-temperature coolant circuit (LT coolant circuit, 29), which is separate from the HT coolant circuit (5) and which is at a lower temperature than the HT coolant circuit (5), for the liquid cooling of at least one further component (13, 31, 33), which is to be cooled, of the vehicle (1), in particular of at least one charge-air cooler of the vehicle, wherein an energy recovery device (ER device, 15) is provided, by means of which mechanical, hydraulic or electrical energy can be recovered and/or generated from waste heat of the vehicle (1), in particular waste heat of the internal combustion engine (7) and/or the LT coolant circuit (29), wherein the ER device (15) has at least one heat-supplying heat exchanger (9, 21, 23), by means of which the waste heat of the vehicle (1) can be supplied to the ER device (15), wherein the ER device (15) has at least one heat-discharging heat exchanger (13), by means of which heat can be discharged from the ER device (15), wherein the heat-discharging heat exchanger (13) is designed and arranged such that heat can be discharged by means thereof from the ER device (15) both into the HT coolant circuit (5) and into the LT coolant circuit (29), **characterized in that** the heat-discharging heat exchanger (13) is designed such that, for the heat transfer, it can be flowed through both by the HT coolant of the HT coolant circuit (5) and by the LT coolant of the LT coolant circuit (29), and **in that** a closed-loop and/or open-loop control device (69, 73) is provided, by means of which the HT coolant flow and/or the LT coolant flow through the heat-discharging heat exchanger (13) can be controlled in closed-loop and/or open-loop fashion in a manner dependent on at least one vehicle parameter.

2. Cooling system according to Claim 1, **characterized in that** the at least one vehicle parameter is a present operating situation of the internal combustion engine (7) and/or at least one temperature of the HT coolant measured at a defined region of the HT coolant circuit (5) and/or at least one temperature of the LT coolant measured at a defined region of the LT coolant circuit (29) and/or, if a charge-air cooler (31, 33) is provided, the charge-air temperature and/or the heat flow discharged by means of the heat-discharging heat exchanger (13).

3. Cooling system according to Claim 1 or 2, **characterized in that** an HT bypass device (67) is provided, by means of which the HT coolant flow can be at least partially conducted past the heat-discharging heat exchanger (13), and **in that** the closed-loop and/or open-loop control device (69, 73) has a valve device by means of which the HT coolant flow through the HT bypass device (67) and through the heat-discharging heat exchanger (13) can be set and/or adjusted in particular in continuously variable fashion.

4. Cooling system according to any of the preceding claims, **characterized in that** an LT bypass device (71) is provided, by means of which the LT coolant flow can be at least partially conducted past the heat-discharging heat exchanger (13), and **in that** the closed-loop and/or open-loop control device (69, 73) has a valve device by means of which the LT coolant flow through the LT bypass device (71) and through the heat-discharging heat exchanger (13) can be set and/or adjusted in particular in continuously variable fashion.

5. Cooling system according to any of the preceding claims, **characterized in that** the heat-discharging heat exchanger (13) has a first flow channel (61), which can be flowed through by the HT coolant of the HT coolant circuit (5), **in that** the heat-discharging heat exchanger (13) has a second flow channel (63), which can be flowed through by the LT coolant of the LT coolant circuit (29), and **in that** the heat-discharging heat exchanger (13) has a third flow channel (65), which can be flowed through by an ER fluid, which is to be cooled, in particular water and/or water vapour, of the ER device (15), wherein provision is preferably made whereby the flow channels (61, 63, 65) are formed so as to run substantially parallel to one another and/or so as to at least regionally run rectilinearly.

6. Cooling system according to Claim 5, **characterized in that** the flow channels (61, 63, 65) are formed so as to run substantially parallel to one another, and **in that** the heat-discharging heat exchanger (13) is connected in terms of flow to the HT coolant circuit (5), to the LT coolant circuit (29) and to the ER device (15) such that the first flow channel (61) can be flowed through by the HT coolant in a first flow direction, such that the second flow channel (63) can be flowed through by the LT coolant likewise in the first flow direction, and such that the third flow channel (65) can be flowed through by the ER fluid in a second flow direction which is opposite to the first flow direction.

7. Cooling system according to Claim 5 or 6, **characterized in that** the flow channels (61, 63, 65) are formed so as to run substantially parallel to one another, and **in that** the third flow channel (55), which is flowed through by the ER fluid, is arranged so as to run in a defined vicinity in the region of the first and/or second flow channel (61, 63) and/or so as to run between the first and second flow channels (61, 63).

8. Cooling system according to any of the preceding claims, **characterized in that** the ER device (15) is formed such that the energy can be recovered and/or generated by means of a thermodynamic process, preferably by means of a closed thermodynamic cycle, wherein heat can be introduced into the thermodynamic process by means of the heat-supplying heat exchanger (9, 21, 23), and wherein heat can be expelled from the thermodynamic process by means of the heat-discharging heat exchanger (13).

9. Cooling system according to any of the preceding claims, **characterized in that** the at least one heat-supplying heat exchanger (9, 21, 23) is assigned to an exhaust tract (19) of the vehicle (1) such that the heat stored in the exhaust gas (12) of the internal combustion engine (7) can be supplied to the ER device (15), and/or **in that** the at least one heat-supplying heat exchanger (9, 21, 23) is assigned to the HT coolant circuit (5) and/or to the LT coolant circuit (29) such that the heat stored in the HT coolant and/or the heat stored in the LT coolant can be supplied to the ER device (15).

10. Cooling system according to Claim 9, **characterized in that** the exhaust tract (19) of the vehicle (1) has an exhaust-gas recirculation device (11), by means of which at least a part of the exhaust gas (12) of the internal combustion engine (7) can be supplied to the internal combustion engine (7) again, wherein the exhaust gas (12) of the internal combustion engine can be supplied to the exhaust-gas recirculation device (11) at a branch region (17) of the exhaust tract (19), wherein provision is preferably made whereby the at least one heat-supplying heat exchanger (9, 21, 23) is assigned to the exhaust-gas recirculation device (11) and/or to an exhaust-gas discharge device (59), which is arranged downstream of the branch region (17) as viewed in the exhaust-gas flow direction and which serves for discharging the exhaust gas (12) into the vehicle surroundings, of the exhaust tract (19).

11. Cooling system according to Claim 9 or 10, **characterized in that** the at least one heat-supplying heat exchanger (9, 21, 23) is assigned to the exhaust tract (19) upstream of a turbine (60) of at least one exhaust-gas turbocharger (41, 45) of the vehicle (1) as viewed in an exhaust-gas flow direction, and/or **in that** the at least one heat exchanger (9, 21, 23) assigned to the exhaust-gas recirculation device (11) is designed such that, by means thereof, the heat stored in the exhaust gas (12) can be supplied both to the ER device (15) and also to the HT coolant circuit (5) and/or to the LT coolant circuit (29).

12. Cooling system according to any of the preceding claims, **characterized in that** the HT coolant circuit (5) has an HT conveying device (28), in particular a pump, which is in particular operable independently of a rotational speed of the internal combustion engine (7) and by means of which the HT coolant can be conveyed through the HT coolant circuit (5), and/or **in that** the HT coolant circuit (5) has an HT cooling device (24), in particular a cooler, by means of which the HT coolant circuit (5) can be cooled.

13. Cooling system according to any of the preceding claims, **characterized in that** the LT coolant circuit (29) has an LT conveying device (51), in particular a pump, which is in particular operable independently of a rotational speed of the internal combustion engine (7) and by means of which the LT coolant can be conveyed through the LT coolant circuit (29), and/or **in that** the LT coolant circuit (29) has an LT cooling device (49), in particular a cooler, by means of which the LT coolant circuit (29) can be cooled.

14. Cooling system according to any of the preceding claims, **characterized in that** a closed-loop and/or open-loop control device is provided, by means of which the ER device (15) can be activated and deactivated, and/or **in that** the heat-discharging heat exchanger (13) is designed such that, by means thereof, in particular when the ER device (15) is inactive, heat can be transferred from the HT coolant circuit (5) into the LT coolant circuit (29) and/or vice versa.

15. Method for operating a cooling system for a vehicle, in particular for a utility vehicle, having a high-temperature coolant circuit (HT coolant circuit, 5) for the liquid cooling of an internal combustion engine (7) of the vehicle (1), and having a low-temperature coolant circuit (LT coolant circuit, 29), which is separate from the HT coolant circuit (5) and which is at a lower temperature than the HT coolant circuit (5), for the liquid cooling of at least one further component (13, 31, 33), which is to be cooled, of the vehicle (1), in particular of at least one charge-air cooler of the vehicle, wherein an energy recovery device (ER device, 15) is provided, by means of which mechanical, hydraulic or electrical energy is recovered and/or generated from waste heat of the vehicle (1), in particular waste heat of the internal combustion engine (7) and/or the LT coolant circuit (29), wherein the ER device (15) has at least one heat-supplying heat exchanger (9, 21, 23), by means of which the waste heat of the vehicle (1) is supplied to the ER device (15), wherein the ER device (15) has at least one heat-discharging heat exchanger (13), by means of which heat is at least intermittently discharged from the ER device (15), wherein the heat-discharging heat exchanger (13) is designed and arranged such that heat is discharged by means thereof from the ER device (15) both into the HT coolant circuit (5) and into the LT coolant circuit (29), **characterized in that** the heat-discharging heat exchanger (13) is designed such that, for the heat transfer, it is flowed through both by the HT coolant of the HT coolant circuit (5) and by the LT coolant of the LT coolant circuit (29), and **in that** a closed-loop and/or open-loop control device (69, 73) is provided, by means of which the HT coolant flow and/or the LT coolant flow through the heat-discharging heat exchanger (13) is controlled in closed-loop and/or open-loop fashion in a manner dependent on at least one vehicle parameter.

16. Vehicle, in particular utility vehicle, having a cooling system according to any of Claims 1 to 14.

17. Vehicle, in particular utility vehicle, having a cooling system according to any of Claims 1 to 14 for carrying out a method according to Claim 15.

## Revendications

1. Système de refroidissement pour un véhicule, notamment pour un véhicule utilitaire, comprenant un circuit de fluide de refroidissement à haute température (circuit de fluide de refroidissement HT, 5) destiné au refroidissement par liquide d'un moteur à combustion interne (7) du véhicule (1), et comprenant un circuit de fluide de refroidissement à basse température (circuit de fluide de refroidissement BT, 29) séparé du circuit de fluide de refroidissement HT (5) et possédant une température inférieure à celle du circuit de fluide de refroidissement HT (5), destiné au refroidissement par liquide d'au moins un composant (13, 31, 33) à refroidir supplémentaire du véhicule (1), notamment d'au moins un radiateur à air de suralimentation du véhicule, un dispositif de récupération d'énergie (dispositif ER, 15) étant présent, au moyen duquel de l'énergie mécanique, hydraulique ou électrique peut être récupérée et/ou peut être générée à partir de la chaleur perdue du véhicule (1), notamment d'une chaleur perdue du moteur à combustion interne (7) et/ou du circuit de fluide de refroidissement BT (29), le dispositif ER (15) possédant au moins un échangeur thermique d'acheminement de chaleur (9, 21, 23), au moyen duquel la chaleur perdue du véhicule (1) peut être acheminée au dispositif ER (15), le dispositif ER (15) possédant au moins un échangeur thermique d'évacuation de chaleur (13), au moyen duquel de la chaleur peut être évacuée du dispositif ER (15), l'échangeur thermique d'évacuation de chaleur (13) étant configuré et disposé de telle sorte qu'il permet d'évacuer de la chaleur du dispositif ER (15) aussi bien dans le circuit de fluide de refroidissement HT (5) que dans le circuit de fluide de refroidissement BT (29), **caractérisé en ce que** l'échangeur thermique d'évacuation de chaleur (13) est configuré de telle sorte que pour le transfert de chaleur, celui-ci peut être traversé aussi bien par le flux de fluide de refroidissement HT du circuit de fluide de refroidissement HT (5) que par le flux de fluide de refroidissement BT du circuit de fluide de refroidissement BT (29), et **en ce qu'**un dispositif de régulation et/ou de commande (69, 73) est présent, à l'aide duquel le flux de fluide de refroidissement HT et/ou le flux de fluide de refroidissement BT à travers l'échangeur thermique d'évacuation de chaleur (13) peut être régulé et/ou commandé en fonction d'au moins un paramètre de véhicule.

2. Système de refroidissement selon la revendication 1, **caractérisé en ce que** l'au moins un paramètre de véhicule est une situation de fonctionnement actuelle du moteur à combustion interne (7) et/ou au moins une température du fluide de refroidissement HT mesurée au niveau d'une zone définie du circuit de fluide de refroidissement HT (5) et/ou au moins une température du fluide de refroidissement BT mesurée au niveau d'une zone définie du circuit de fluide de refroidissement BT (29) et/ou, sous réserve qu'un radiateur à air de suralimentation (31, 33) soit présent, la température de l'air de suralimentation et/ou le flux thermique évacué au moyen de l'échangeur thermique d'évacuation de chaleur (13).

3. Système de refroidissement selon la revendication 1 ou 2, **caractérisé en ce qu'**un dispositif de contournement HT (67) est présent, au moyen duquel le flux de fluide de refroidissement HT peut au moins partiellement être amené à passer par l'échangeur thermique d'évacuation de chaleur (13), et **en ce que** le dispositif de régulation et/ou de commande (69, 73) possède un dispositif à vanne au moyen duquel le flux de fluide de refroidissement HT à travers le dispositif de contournement HT (67) et à travers l'échangeur thermique d'évacuation de chaleur (13) peut être réglé et/ou modifié, notamment progressivement.

4. Système de refroidissement selon l'une des revendications précédentes, **caractérisé en ce qu'**un dispositif de contournement BT (71) est présent, au moyen duquel le flux de fluide de refroidissement BT peut au moins partiellement être amené à passer par l'échangeur thermique d'évacuation de chaleur (13), et **en ce que** le dispositif de régulation et/ou de commande (69, 73) possède un dispositif à vanne au moyen duquel le flux de fluide de refroidissement BT à travers le dispositif de contournement BT (71) et à travers l'échangeur thermique d'évacuation de chaleur (13) peut être réglé et/ou modifié, notamment progressivement.

5. Système de refroidissement selon l'une des revendications précédentes, **caractérisé en ce que** l'échangeur thermique d'évacuation de chaleur (13) possède un premier canal d'écoulement (61), qui peut être traversé par le flux de fluide de refroidissement HT du circuit de fluide de refroidissement HT (5), **en ce que** l'échangeur thermique d'évacuation de chaleur (13) possède un deuxième canal d'écoulement (63), qui peut être traversé par le flux de fluide de refroidissement BT du circuit de fluide de refroidissement BT (29), et **en ce que** l'échangeur thermique d'évacuation de chaleur (13) possède un troisième canal d'écoulement (65), qui peut être traversé par un fluide ER à refroidir, notamment de l'eau et/ou de la vapeur d'eau, du dispositif ER (15), en prévoyant de préférence que les canaux d'écoulement (61, 63, 65) sont configurés pour s'étendre sensiblement en parallèle les uns aux autres et/ou de manière rectiligne au moins dans certaines zones.

6. Système de refroidissement selon la revendication 5, **caractérisé en ce que** les canaux d'écoulement (61, 63, 65) sont configurés pour s'étendre sensiblement en parallèle les uns aux autres et **en ce que** l'échangeur thermique d'évacuation de chaleur (13) est relié fluidiquement au circuit de fluide de refroidissement HT (5), au circuit de fluide de refroidissement BT (29) et au dispositif ER (15) de telle sorte que le premier canal d'écoulement (61) peut être traversé par le flux de fluide de refroidissement HT dans une première direction d'écoulement, que le deuxième canal d'écoulement (63) peut être traversé par le flux de fluide de refroidissement BT également dans la première direction d'écoulement et que le troisième canal d'écoulement (65) peut être traversé par le flux de fluide ER dans une deuxième direction d'écoulement opposée à la première direction d'écoulement.

7. Système de refroidissement selon la revendication 5 ou 6, **caractérisé en ce que** les canaux d'écoulement (61, 63, 65) sont configurés pour s'étendre sensiblement en parallèle les uns aux autres et **en ce que** le troisième canal d'écoulement (65) traversé par le flux de fluide ER est disposé dans une zone de proximité définie pour s'étendre dans la zone du premier et/ou du deuxième canal d'écoulement (61, 63) et/ou entre le premier et le deuxième canal d'écoulement (61, 63).

8. Système de refroidissement selon l'une des revendications précédentes, **caractérisé en ce que** le dispositif ER (15) est configuré de telle sorte que l'énergie peut être récupérée et/ou générée au moyen d'un processus thermodynamique, de préférence au moyen d'un processus thermodynamique en circuit fermé, de la chaleur pouvant être transmise dans le processus thermodynamique au moyen de l'échangeur thermique d'acheminement de chaleur (9, 21, 23) et de la chaleur pouvant être évacuée du processus thermodynamique au moyen de l'échangeur thermique d'évacuation de chaleur (13).

9. Système de refroidissement selon l'une des revendications précédentes, **caractérisé en ce que** l'au moins un échangeur thermique d'acheminement de chaleur (9, 21, 23) est associé à une branche de gaz d'échappement (19) du véhicule (1) de telle sorte que la chaleur accumulée dans les gaz d'échappement (12) du moteur à combustion interne (7) peut être acheminée au dispositif ER (15) et/ou **en ce que** l'au moins un échangeur thermique d'acheminement de chaleur (9, 21, 23) est associé au circuit de fluide de refroidissement HT (5) et/ou au circuit de fluide de refroidissement BT (29) de telle sorte que la chaleur accumulée dans le fluide de refroidissement HT et/ou la chaleur accumulée dans le fluide de refroidissement BT peut être acheminée au dispositif ER (15).

10. Système de refroidissement selon la revendication 9, **caractérisé en ce que** la branche de gaz d'échappement (19) du véhicule (1) possède un dispositif de recyclage des gaz d'échappement (11) au moyen duquel au moins une partie des gaz d'échappement (12) du moteur à combustion interne (7) peut de nouveau être acheminée au moteur à combustion interne (7), les gaz d'échappement (12) du moteur à combustion interne pouvant être acheminés au dispositif de recyclage des gaz d'échappement (11) au niveau d'une zone de bifurcation (17) de la branche de gaz d'échappement (19), en prévoyant de préférence que l'au moins un échangeur thermique d'acheminement de chaleur (9, 21, 23) est associé au dispositif de recyclage des gaz d'échappement (11) et/ou à un dispositif d'évacuation des gaz d'échappement (59) de la branche de gaz d'échappement (19), disposé en aval de la zone de bifurcation (17) vu dans la direction d'écoulement des gaz d'échappement, en vue d'évacuer les gaz d'échappement (12) dans l'environnement du véhicule.

11. Système de refroidissement selon la revendication 9 ou 10, **caractérisé en ce que** l'au moins un échangeur thermique d'acheminement de chaleur (9, 21, 23), vu dans la direction d'écoulement des gaz d'échappement, en amont d'une turbine (60) d'au moins un turbocompresseur des gaz d'échappement (41, 45) du véhicule (1), est associé à la branche de gaz d'échappement (19) et/ou **en ce que** l'au moins un échangeur thermique (9, 21, 23) associé au dispositif de recyclage des gaz d'échappement (11) est configuré de telle sorte qu'il permet d'acheminer la chaleur accumulée dans les gaz d'échappement (12) aussi bien au dispositif ER (15) qu'au circuit de fluide de refroidissement HT (5) et/ou au circuit de fluide de refroidissement BT (29).

12. Système de refroidissement selon l'une des revendications précédentes, **caractérisé en ce que** le circuit de fluide de refroidissement HT (5) possède un dispositif de transport HT (28), notamment une pompe, qui peut notamment fonctionner indépendamment d'une vitesse de rotation du moteur à combustion interne (7), au moyen duquel le fluide de refroidissement HT peut être transporté à travers le circuit de fluide de refroidissement HT (5) et/ou **en ce que** le circuit de fluide de refroidissement HT (5) possède un dispositif de refroidissement HT (24), notamment un radiateur, au moyen duquel le circuit de fluide de refroidissement HT (5) peut être refroidi.

13. Système de refroidissement selon l'une des revendications précédentes, **caractérisé en ce que** le circuit de fluide de refroidissement BT (29) possède un dispositif de transport BT (51), notamment une pompe, qui peut notamment fonctionner indépendamment d'une vitesse de rotation du moteur à combustion interne (7), au moyen duquel le fluide de refroidissement BT peut être transporté à travers le circuit de fluide de refroidissement BT (29) et/ou **en ce que** le circuit de fluide de refroidissement BT (29) possède un dispositif de refroidissement BT (49), notamment un radiateur, au moyen duquel le circuit de fluide de refroidissement BT (29) peut être refroidi.

14. Système de refroidissement selon l'une des revendications précédentes, **caractérisé en ce qu'**un dispositif de régulation et/ou de commande est présent, au moyen duquel le dispositif ER (15) peut être activé et désactivé, et/ou **en ce que** l'échangeur thermique d'évacuation de chaleur (13) est configuré de telle sorte qu'il permet, notamment lorsque le dispositif ER (15) est désactivé, de transmettre de la chaleur du circuit de fluide de refroidissement HT (5) dans le circuit de fluide de refroidissement BT (29) et/ou inversement.

15. Procédé pour faire fonctionner un système de refroidissement pour un véhicule, notamment pour un véhicule utilitaire, comprenant un circuit de fluide de refroidissement à haute température (circuit de fluide de refroidissement HT, 5) destiné au refroidissement par liquide d'un moteur à combustion interne (7) du véhicule (1), et comprenant un circuit de fluide de refroidissement à basse température (circuit de fluide de refroidissement BT, 29) séparé du circuit de fluide de refroidissement HT (5) et possédant une température inférieure à celle du circuit de fluide de refroidissement HT (5), destiné au refroidissement par liquide d'au moins un composant (13, 31, 33) à refroidir supplémentaire du véhicule (1), notamment d'au moins un radiateur à air de suralimentation du véhicule, un dispositif de récupération d'énergie (dispositif ER, 15) étant présent, au moyen duquel de l'énergie mécanique, hydraulique ou électrique peut être récupérée et/ou peut être générée à partir de la chaleur perdue du véhicule (1), notamment une chaleur perdue du moteur à combustion interne (7) et/ou du circuit de fluide de refroidissement BT (29), le dispositif ER (15) possédant au moins un échangeur thermique d'acheminement de chaleur (9, 21, 23), au moyen duquel la chaleur perdue du véhicule (1) peut être acheminée au dispositif ER (15), le dispositif ER (15) possédant au moins un échangeur thermique d'évacuation de chaleur (13), au moyen duquel de la chaleur peut être évacuée du dispositif ER (15), l'échangeur thermique d'évacuation de chaleur (13) étant configuré et disposé de telle sorte qu'il permet d'évacuer au moins temporairement de la chaleur du dispositif ER (15) aussi bien dans le circuit de fluide de refroidissement HT (5) que dans le circuit de fluide de refroidissement BT (29), **caractérisé en ce que** l'échangeur thermique d'évacuation de chaleur (13) est configuré de telle sorte que pour le transfert de chaleur, celui-ci est traversé aussi bien par le flux de fluide de refroidissement HT du circuit de fluide de refroidissement HT (5) que par le flux de fluide de refroidissement BT du circuit de fluide de refroidissement BT (29), et **en ce qu'**un dispositif de régulation et/ou de commande (69, 73) est présent, à l'aide duquel le flux de fluide de refroidissement HT et/ou le flux de fluide de refroidissement BT à travers l'échangeur thermique d'évacuation de chaleur (13) est régulé et/ou commandé en fonction d'au moins un paramètre de véhicule.

16. Véhicule, notamment véhicule utilitaire, comprenant un système de refroidissement selon l'une des revendications 1 à 14.

17. Véhicule, notamment véhicule utilitaire, comprenant un système de refroidissement selon l'une des revendications 1 à 14 destiné à mettre en oeuvre le procédé selon la revendication 15.
